# EUROPEAN PATENT APPLICATION

(11) **EP 4 187 338 A1**
(43) Date of publication of application: **31.05.2023**
(21) Application number: 21210314.7
(22) Date of filing: 24.11.2021
(51) Int. Cl.: G05B 19/418

(54) **METHOD OF PROCESSING DATA FROM A SUPERVISED PRODUCTION ENVIRONMENT**

(71) Applicant: Heineken Supply Chain B.V., 1017 ZD Amsterdam (NL)
(72) Inventor: DEELEN, Willem Gerrit, 1017 ZD Amsterdam (NL); MAAGD, Michiel Herman, 1017 ZD Amsterdam (NL); BING, Xiaoyun, 1017 ZD Amsterdam (NL); RAMIREZ, Ramon Marin, 1017 ZD Amsterdam (NL); PAVLOVIC, David, 1017 ZD Amsterdam (NL)
(74) Representative: V.O.

(57) **Abstract**

In an electronic computing system, a method is provided for processing device data available in a supervised production environment comprising production devices. The method comprises receiving a data request for providing production data related to a production parameter of a production device, obtaining device connectivity data related to the production device, setting up a data request message for requesting the production data in accordance with the device connectivity data and addressing a production device communication module of the production device in accordance with the device connectivity data. The method further comprises, if the addressing is successful, sending the data request message to the production device communication module in accordance with the device connectivity data, receiving the requested data related to a production parameter of the production device from the production device communication module; and presenting the received data.

## Description

### TECHNICAL FIELD

The various aspects and variations thereof relate to acquisition of data values for parameters related to machines in a factory.

### BACKGROUND

Programmable logic controllers - PLCs - are known and used for a longer time to monitor and control machines in a factory for manufacturing processes. Many different types of PLCs are available, providing their data to a user interface device in the factory. If a new device is added, the user interface device has to be configured by adding information on the PLC, one or more parameters monitored and/or controlled, a data communication protocol and possibly more.

### SUMMARY

Managing PLCs in a factory and adding or modifying PLCs by letting existing PLCs monitor another or an additional parameter is a job requiring proper administration and can be arranged by one and the same service engineer, in one user interface device. But when data acquirable by all PLCs is to be monitored at a remote location, such modification of PLCs and user interface is generally not possible. Firstly, many communication protocols may have to be employed, of which no direct knowledge may be available at the remote location. Second, security may be an issue, for example if a communication pipe is kept open between sensor/PLC and a computer at the remote location. It is preferred to address - remove or at least alleviate - one or more of these issues or otherwise improve the current situation.

To this end, a first aspect provides, in an electronic computing system, a method of processing device data available in a supervised production environment comprising production devices. The method comprises receiving a data request for providing production data related to a production parameter of a production device, obtaining device connectivity data related to the production device, setting up a data request message for requesting the production data in accordance with the device connectivity data and addressing a production device communication module of the production device in accordance with the device connectivity data. The method further comprises, if the addressing is successful, sending the data request message to the production device communication module in accordance with the device connectivity data, receiving the requested data related to a production parameter of the production device from the production device communication module; and presenting the received data.

In a conventional manufacturing environment, individual machines are provided with dedicated PLCs with dedicated data transmission protocols and connected to dedicated local monitoring equipment. Different machines may be provided with different PLCs, employing different data transmission protocols that have different formats for providing data and may even employ different formats for transmission of packets. With every machine having its own PLCs with proprietary protocols, central and remote access of each and every PLC is very difficult or may even be virtually impossible. This is in particular the case if new machines with new PLCs are added, with new protocols.

Using the method of the first aspect, connection data - Connectors - may be stored at a central place, for example at the manufacturing site. This data may be used by a local data hub to port data provided by machines - as sensed by sensors connected to PLCs - from the proprietary or open protocols used by the PLCs to one or more data protocols suitable for transmission of the data, which data transmission protocols may be more generic end/of more suitable for transmission of data using open networks, like the internet.

When a new machine and/or a new PLC is installed, data related to the new PLC and/or new machine and applicable sensors - and/or control actuators - and connection data in particular only needs to be added to the data hub, either on the manufacturing site or another central location. Subsequently, any other device may obtain the sensor data using the one or more generic data transmission protocols for retrieving the data for further processing and/or presenting the data to a user.

In a variation of the first aspect, the addressing comprises verifying whether the communication module can provide the data related to the production parameter. If the applicable communication module, for example a data hub or a PLC, cannot be reached, a warning may be triggered. As a result, another system may be made aware that repair may be required and/or that further querying a data value may not be feasible.

In another variation, the device connectivity data comprises an address of the production device communication module and verifying whether the communication module can provide the data related to the production parameter comprises verifying whether the communication module can be addressed using the address of the production device communication module comprised by the device connectivity data. This may be an efficient way of verification, as only a small amount of data may be required.

In a further verification, verifying whether the communication module can provide the data related to the production parameter comprises verifying whether the communication module has data available related to the production parameter. Sensor may malfunction, data may be acquired only every hour or every day, a connection between a PLC may be broken or there may be other reasons why not data may be available. This variation checks whether actual data is available and if this is not the case, a user or system may be prompted, upon which appropriate action can be taken based on this information.

Again another variation further comprises, if the verifying fails, set a status of the production parameter to a first classification. This allows for a clear communication and interpretation by an operator or a system.

In yet a further implementation, the device connectivity data comprises data related to a first data communication protocol arranged for communication with the production device communication module; and setting up a data request message in accordance with the device connectivity data comprises formatting the data request message in accordance with the first data communication protocol. This provides an example how the first aspect may be implemented.

In yet another variation, the received data related to the production parameter comprises a received data value for the production parameter. In this variation, the method further comprises verifying that the received data value is a value valid for the production parameter and, if the received data value is verified to be valid, set a status of the production parameter to a second classification. If the data can be validly retrieved and obtained, such second classification may be that, for example at a user interface end, the parameter is classified as valid.

In a further implementation, the received data related to the production parameter comprises a received data value for the production parameter. In this variation, the method further comprises comparing the received data value to an earlier data value for the production parameter, if the received data value is different from the earlier data value, set a status of the production parameter to a second classification. If a data value is received that appears to be valid and that is different from an earlier received value, it is in this variation assumed that a sensor has validly acquired a value in a changing process, meaning that the process runs, the sensor works, the PLCs works and that the system runs in accordance with specifications. In such case, the parameter may for example be classified as valid.

In again a further implementation, the received data related to the production parameter comprises a received data value for the production parameter. In this implementation, the method further comprises: comparing the received data value to an earlier data value for the production parameter and, if the received data value is the same as the earlier data value, set a status of the production parameter to a third classification. If there is no change whatsoever in the value of a parameter, either when a new value is received or not, it may be that there is a problem with data acquisition - or another problem. In any case, it is possible that the latter - unchanged - data value is not a correct representation of an actual situation and that the request for data is still pending. If that is the case, the parameter may be classified as such. Alternatively, the parameter may be classified as pending. And in another variation, if a data value is received and it is the same as the previously received data value, it may nonetheless be classified as valid, as a value has been received after all.

In yet another variation, the received data related to the production parameter does not comprises a received data value for the production parameter. In this variation, the method further comprises determining whether an earlier data value for the production parameter is available and, if no earlier data value for the production parameter is available, set a status of the production parameter to a third classification. If data is received in response to a data request, from the applicable PLC, the parameter and the applicable sensor exist - and may therefore be considered not to be invalid. On the other hand, classifying the parameter as valid may go too far, as no value is received. The parameter may in such case be classified as pending.

In again a further variation, applicable to all variations above and below, the data request message comprises a request for the value of the production parameter. Such data message provides a clear indication what data is sought.

In yet a further variation, the data request message comprises a request for meta data related to the production parameter. Such meta data may be time, data format - byte, nibble, word, long word, floating point data -, entity - width, height, temperature, humidity -, measure - kilograms, litres, millimetres, degrees Centigrade -, other, or a combination thereof, allowing efficient and comprehensible processing of data.

In another variation, the electronic computing system comprises a data server and a connectivity server. The method further comprises sending, by the data server, the connectivity data and a parameter identifier identifying the production parameter to the connectivity server, receiving, by the connectivity server, the connectivity data and the parameter identifier, wherein the connectivity server executes the setting up of the data request message, the addressing of the production device, the sending of the data request, receiving, by the connectivity server, the requested data related to the production parameter of the production device from the production device communication module and sending, by the connectivity server, the requested data related to the production parameter of the production device. In this way, data processing is efficiently distributed over multiple devices. The processing may be complemented by presenting data on an additional personal computing device.

In a further implementation, dependent on the variation of claim 6, the requested data related to the production parameter received by the connectivity server is received in accordance with the first protocol; this variation further comprises setting up, by the connectivity server, a data presentation message comprising the requested data, in accordance with a second data communication protocol different from the first data communication protocol and sending, by the connectivity server, the requested data related to the production parameter of the production device to the data server in accordance with the second data communication protocol. This variation allows for more flexibility in use of different data communication protocols.

A second aspect provides an electronic computing system arranged for processing device data available in a supervised production environment comprising production devices. The system comprises an input arranged to receive a data request for providing production data related to a production parameter of a production device and one or more a processing units arranged to obtain device connectivity data related to the production device, set up a data request message for requesting the production data in accordance with the device connectivity data, address a production device communication module of the production device in accordance with the device connectivity data and determine whether the addressing is successful. The system further comprises one or more a communication modules arranged to, if the addressing is successful, sending the data request message to the production device communication module in accordance with the device connectivity data, receive the requested data related to a production parameter of the production device from the production device communication module. The system further comprises an output arranged to present the received data.

Another aspect may provide a computer program product comprising computer executable code enabling a computer, when the executable code is provided in a memory connected to a processing unit of the computer, to execute the method of the first aspect or any variation thereof. A further aspect may provide a non-transitory memory holding such computer program product.

### BRIEF DESCRIPTION OF THE DRAWINGS

The various aspects and variations thereof will now be elucidated in further detail in conjunction with drawings. In the drawings:
- Figure 1:: shows a factory monitoring system; and
- Figure 2:: shows a flowchart.

### DETAILED DESCRIPTION

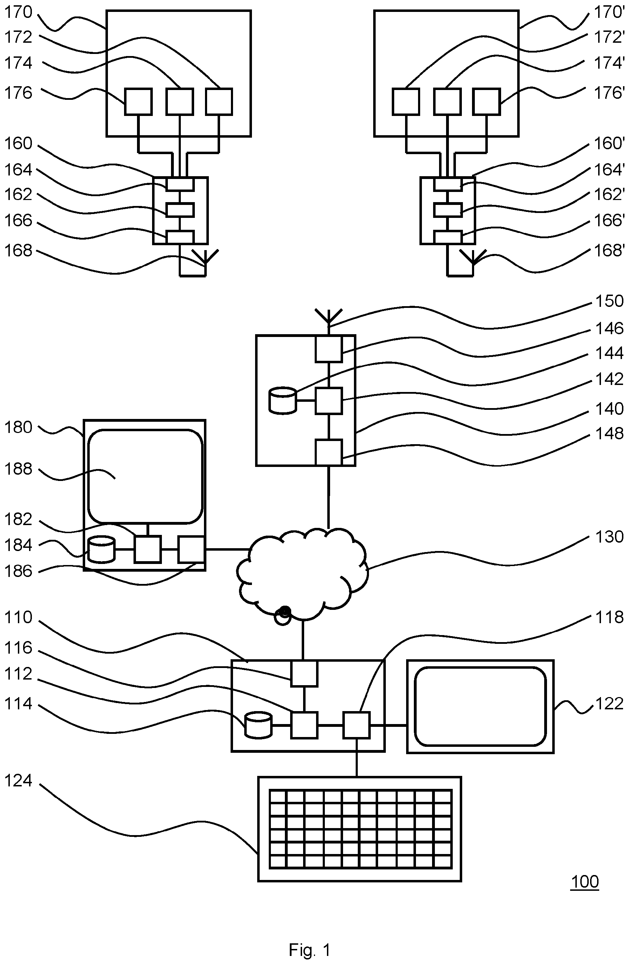

Figure 1 shows a factory monitoring system 100. The factory monitoring system 100 comprises a factory environment as a supervised production environment. The factory environment comprises a first machine 170 and a second machine 170'. The first machine 170 is provided with a first sensor 172, a second sensor 174 and a third sensor 176. The sensors are provided for monitoring various parts of the first machine 170. Such entities may be line speed, revolutions of an axle, a wheel or another rotating element, a characteristic of a substance like pressure, temperature, acidity, conductivity, other, or a combination thereof, vibrations of any part of the first machine 170, a force exerted on a part of the first machine 170, any other mechanical, electrical, physical, chemical property, other, or any combination of two or more of these.

The sensors are connected to a first machine communication module 160. The first machine communication module 160 may be implemented by means of a programmable logic controller. The first machine communication module 160 comprises a machine interface 164, a processing unit 162 and a network interface 166. The network interface 166 is connected to an antenna 168 for wireless communication. In another variation, the network interface 166 is arranged for wired network communication.

The machine interface 164 is arranged to receive signals from the sensors in the first machine 170, preferably electrical signals carrying information on the observed entity. The processing unit 162 is arranged to process the received electronic signal. The processing may include at least one of analogue to digital conversion, compression, statistical processing like calculating at least one of an average, a median, a standard deviation, encryption, encapsulation in a data package in accordance with a data communication, other, or a combination thereof. The network interface 166 is arranged to communicate the processed data to another communication device.

The second machine 170' is provided with sensors and a second machine communication module 160' in an equivalent way; equivalent parts are indicated by the same reference signs, complemented with a prime (').

Preferably in the vicinity of the first machine 170 and the second machine 170', a data hub 140 is provided as a variation of a connectivity server. The data hub comprises a hub processing unit 142, a hub memory 144 as a data storage module, a local network interface 146 and a hub wide area network interface 148.

The local network interface 146 provided with an antenna 150 and is arranged to receive data from the first machine communication module 160. Alternatively or additionally, the local network interface may be arranged for wired communication. The hub processing unit 142 is arranged to process the data received from the first machine communication module 160 - and from the second machine communication module 160'. The processing may include at least one of analogue to digital conversion, compression, statistical processing like calculating at least one of an average, a median, a standard deviation, encryption, encapsulation in a data package in accordance with a data communication, other, or a combination thereof.

In one variation, data may be received from multiple machine communication modules provided in accordance with multiple standards. The local network interface 146 and the hub processing unit 142 are arranged to handle data received in accordance with each of the multiple standards. Furthermore, the local network interface 146 and the hub processing unit 142 are arranged to handle data received in accordance with each of the multiple standards are arranged to send messages to multiple machine communication modules in accordance with the multiple standards. As such, the local network interface 146 and the network interface 166 are arranged to communication in accordance with the multiple standards.

In one option, the hub memory 144 has data stored thereon related to data protocols with which each machine communication module is arranged to communicate. This data may be retrieved by the hub processing unit 142 to communicate with the machine communication modules. The hub memory 144 may also have data stored thereon for programming the hub processing unit. As such, the hub memory 144 may be a volatile, non-volatile, transitory or non-transitory memory or any combination thereof.

The hub processing unit 142 is further arranged to convert data received in accordance with the various protocols to data messages that may be transferred over a wide area network 130 to a data server 110 by means of the hub wide area network interface 148.

The data server 110 comprises a server side area network interface 116 arranged to communicate with the hub wide area network interface 148. The data server further comprises a server processing unit 112 for processing data received and for controlling further operation of the data server 110. The data server 110 comprises a server memory module 114 as a data storage module and is arranged for storing data received and to be sent, either processed or not.

The server memory module 114 may also have data stored thereon related to data protocols with which each machine communication module is arranged to communicate. As such, the server processing unit 112 may be arranged to compose data messages in accordance with data protocols with each of the machine communication modules are arranged to communicate. Furthermore, the server memory module may have data stored thereon for programming the server processing unit 112. As such, the server memory module 114 may be a volatile, non-volatile, transitory or non-transitory memory or any combination thereof.

The data server 110 is connected to an electronic display screen 122 as a visual output module and a keyboard 124 as a user input module via a user interface module 118 that is connected to the server processing unit 112. On the electronic display screen 122, an overview of data available for selection may be provided. Additionally or alternatively, options are provided to a user to query a particular machine communication module 160 for data related to a machine. The selection may be made by means of the keyboard 124 or, additionally or alternatively, at least one of other user input devices like a mouse, a voice instruction system, other, or a combination thereof.

Additionally or alternatively, data processed by the data server 110 may be accessible by means of a smartphone 180 as a personal computing device. The smartphone 180 comprises a smartphone network interface module 186 for connecting with the server side area network interface 116 for obtaining data relevant for a specific parameter of the first machine 170 or the second machine 170'.

To be able to provide data, a data supply protocol server may be provided by the data server 110 and the server side area network interface 116 in particular, for example a hypertext transfer protocol (http) server. The smartphone network interface module 186 may be provided with an http client for retrieving data.

The smartphone 180 further comprises a smartphone processing unit 182, a smartphone memory 184 as a data storage module and a touchscreen 188 as a user input and output device. The smartphone processing unit 182 is arranged for controlling operation of the smartphone 180. The operation may include processing requests for data received by means of the touch screen 188 and sending the requests for data to the data server 110 or directly to the data hub 140, by means of the smartphone network interface module 186.

The operation of the smartphone processing unit 182 may also include receiving data from the data server 110 or directly from the data hub 140. The data is received by means smartphone network interface module 186 and may be further processed by the smartphone processing unit 182. The data may be stored, in processed and/or received state, in the smartphone memory 184. The smartphone memory 184 may also have data stored in it for programming the smartphone processing unit 182. The processed data may be provided to a user by means of the touchscreen 188.

In one implementation, the processing of data provided by the data hub 140 is processed by the data server 110 and accessible for users by means of a personal computing device like the smartphone 180, a personal desktop or laptop computer, a virtual desktop client, other or a combination thereof. Such personal computing device may connect to the data server 110 via the network 130. Within the network 130, one or more virtual private networks or other secured data transmission pipes may be provided for secure data transmission.

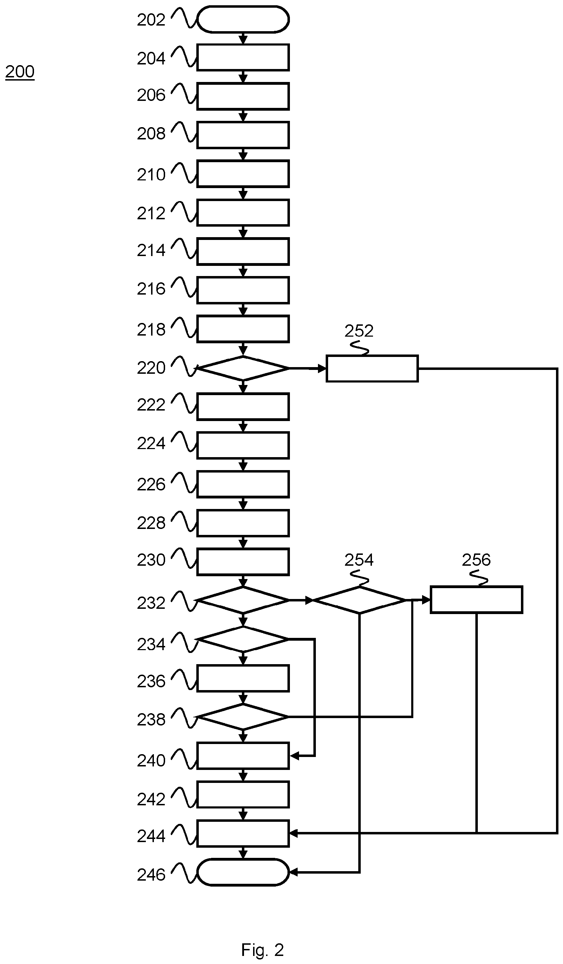

Further details and functionality of the factory monitoring system 100 will be discussed in further details in conjunction with a flowchart 200 as depicted by Figure 2. The various parts of the flowchart 200 are briefly summarised in the list below.
- 202: start procedure
- 204: receive data request for a parameter
- 206: identify the applicable equipment
- 208: obtain connection data for the identified machine
- 210: compose data request message
- 212: send data request message to the data hub
- 214: receive data request message from the server
- 216: identify the addressed equipment
- 218: hail identified equipment
- 220: response back from equipment?
- 222: send request for data to the identified equipment
- 224: receive data response from the identified equipment
- 226: prepare data message for the server
- 228: send prepared data message
- 230: received prepared data message
- 232: valid data in the response for the parameter?
- 234: earlier parameter value available?
- 236: compare earlier parameter value to received parameter value
- 238: different value?
- 240: classify as valid parameter
- 242: present parameter value
- 244: present parameter classification
- 246: end procedure
- 252: classify as invalid
- 254: earlier value available?
- 256: classify as pending

The procedure starts with a terminator 202 and proceeds to step 204 in which the data server 110 receives a request for data via the user interface module 118 or via the smartphone 180. With the data request, an identifier may be provided with which the applicable equipment or applicable machine may be identified. For example, a parameter may be selected on the electronic display device 122, which parameter is related to the first machine 170. Details on the parameter and the relation to the first machine may be stored on the server memory module 114. The first machine 170 is identified in step 204, based on the parameter selected.

In step 208, the data server obtains connection data for the first machine 170. The connection data for the first machine may comprise a network address of the first machine communication module 160, a data communication protocol used by the first machine communication module 160, a sub address within the first machine communication module 160 for the first sensor 172, a data acquisition frequency, other or a combination of two or more of these. Using the selected parameter for which one or more data values are requested and the connection data, a data request message is composed in step 210 and sent to the data hub 140 in step 212 by means of the server side area network interface 116, via the network 130.

In step 214, the data request message is received by the data hub 140 by means of the a hub wide area network interface 148. The data request message is processed by the hub processing unit 142 and as part of the processing, the machine address is identified in step 216. The identification may take place by retrieving the network address of the first machine communication module 160 from the data request message received. Alternatively or additionally, the data request message comprises another identifier of the first machine 170 and based on the other identifier, the hub processing unit 142 looks up data in the hub memory 144 to identify the first machine.

The data looked up and, if available, retrieved from the hub memory 144 may comprise address data. This means that the address data of the first machine 170 and/or the first machine communication module 160 may be obtained either in the data server 110, the data hub 140 or both. The identification looked up is used by the hub processing unit 142 to hail the first machine 170 or the first machine communication module 160 in step 218.

Hailing may comprise sending a request to send back a response message comprising a particular string; such string may comprise one byte or even less - or more data. Such data may be random or pre-determined.

In step 220, the hub processing unit 142 checks whether the first machine communication module 160 has sent back a response hub server 140 ad the local network interface 146 thereof in particular. If this is the case, a request for the data - a value of the parameter selected earlier - is prepared and sent to the first machine communication module 160 in step 222. However, if the hailing does not result in a response, the process branches to step 252 in which the parameter is identified as invalid. The procedure subsequently proceeds to step 244, in which the parameter is presented as invalid and the procedure ends in a terminator 246.

The determination that the selected parameter is identified as invalid may be communicated back to the data server 110 and this information may be presented to a user on the electronic display device 122. Following step 222, the data hub 140 receives a data response from the first machine communication module 160 in step 224, with a data value based on a signal received from the first sensor 172.

The value of a signal received from the first sensor 172 is processed by the first machine communication module 160 as discussed above and provided in a data message in accordance with a data communication protocol for which the network interface 166 is arranged to communicate. The local network interface 146 may be arranged to communicate using one or more different data communication protocols.

With the data received, the hub processing unit 142 prepares a data message for the data server 110 in step 226 to provide the data value for the selected parameter. The processing may concern general porting of data received, from one protocol to another, from a data communication protocol for which the network interface 166 is arranged to a data communication protocol generally used for communication over the network 130.

The data message thus prepared is sent in step 228 by the hub wide area network interface 148 and received by the server side area network interface 116 in step 230. In step 232, the data server and the server processing unit 112 in particular checks whether the data in the received message is valid. In particular, the server processing unit 112 checks whether the value provided for a data request related to the first sensor 172 is a value that may reasonably be expected.

If, for example, a temperature is measured, a value of 4000 is invalid for temperature in Kelvin - and a string of alphanumerical characters representing Roman letters is invalid as well. Otherwise, it may be that the value field in the data message is void, for example comprising random data or a string of zeros.

If it is determined in step 232 that the data received is invalid, the procedure branches to decision 254, in which the server processing unit 112 check whether an earlier value for the applicable parameter has been received that has been determined to be valid. If this is the case, the earlier received valid value is kept and the procedure proceeds to the terminator 246 to end the procedure. Also the classification of the parameter is not modified in a particular option for implementation.

If no earlier value has been received which is determined to be valid, the parameter is classified to be pending in step 256 and the procedure proceeds to step 244 to present the parameter as pending. Subsequently, the procedure ends in terminator 246.

If the received data value is considered to be valid, the procedure continues to step 238, in which the server processing unit 112 checks whether an earlier received value is available. If that is the case, the procedure continues to step 236; if this is not the case, the procedure jumps to step 240.

In step 236, the server processing unit 112 compares the earlier received value to the received value. in step 238, the server processing unit 112 decides that if the received value is the same as the earlier received value, the procedure is to branch to step 256 as discussed above. In another implementation, the comparing step 236 and the decision 238 may be omitted.

In step 240, the parameter is classified as valid, as a valid value for the parameter has been received in response to the latest request for data. In step 242, the value of the parameter is presented and in step 244, the classification of the parameter is presented. The data to be presented may be presented on the electronic display device 122. Step 242 and step 244 are interchangeable, as are other steps, unless this would not be possible, for example if one step would be dependent on the output of another.

## Claims

1. In an electronic computing system, a method of processing device data available in a supervised production environment comprising production devices, the method comprising:
receiving a data request for providing production data related to a production parameter of a production device;
obtaining device connectivity data related to the production device;
setting up a data request message for requesting the production data in accordance with the device connectivity data;
addressing a production device communication module of the production device in accordance with the device connectivity data;
if the addressing is successful, sending the data request message to the production device communication module in accordance with the device connectivity data;
receiving the requested data related to a production parameter of the production device from the production device communication module; and
presenting the received data.

2. The method of claim 1, wherein the addressing comprises verifying whether the communication module can provide the data related to the production parameter.

3. The method of claim 2, wherein:
the device connectivity data comprises an address of the production device communication module; and
verifying whether the communication module can provide the data related to the production parameter comprises verifying whether the communication module can be addressed using the address of the production device communication module comprised by the device connectivity data.

4. The method of claim 2 or claim 3, wherein verifying whether the communication module can provide the data related to the production parameter comprises verifying whether the communication module has data available related to the production parameter.

5. The method of any of claims 2 to 4, further comprising, if the verifying fails, set a status of the production parameter to a first classification.

6. The method according to any of the preceding claims, wherein
the device connectivity data comprises data related to a first data communication protocol arranged for communication with the production device communication module; and
setting up a data request message in accordance with the device connectivity data comprises formatting the data request message in accordance with the first data communication protocol.

7. the method according to any of the preceding claims, wherein the received data related to the production parameter comprises a received data value for the production parameter, the method further comprising:
Verifying that the received data value is a value valid for the production parameter;
if the received data value is verified to be valid, set a status of the production parameter to a second classification.

8. the method according to any of the preceding claims, wherein the received data related to the production parameter comprises a received data value for the production parameter, the method further comprising:
comparing the received data value to an earlier data value for the production parameter;
if the received data value is different from the earlier data value, set a status of the production parameter to a second classification.

9. the method according to any of the preceding claims, wherein the received data related to the production parameter comprises a received data value for the production parameter, the method further comprising:
comparing the received data value to an earlier data value for the production parameter;
if the received data value is the same as the earlier data value, set a status of the production parameter to a third classification.

10. the method according to any of the preceding claims, wherein the received data related to the production parameter does not comprises a received data value for the production parameter, the method further comprising:
determining whether an earlier data value for the production parameter is available;
if no earlier data value for the production parameter is available, set a status of the production parameter to a third classification.

11. The method of any of the preceding claims, wherein the data request message comprises a request for the value of the production parameter.

12. The method of claim 11, wherein the data request message comprises a request for meta data related to the production parameter.

13. The method of any of the preceding claims, wherein the electronic computing system comprises a data server and a connectivity server, the method further comprising:
sending, by the data server, the connectivity data and a parameter identifier identifying the production parameter to the connectivity server;
receiving, by the connectivity server, the connectivity data and the parameter identifier;
wherein the connectivity server executes the setting up of the data request message, the addressing of the production device, the sending of the data request;
receiving, by the connectivity server, the requested data related to the production parameter of the production device from the production device communication module; and
sending, by the connectivity server, the requested data related to the production parameter of the production device.

14. The method of claim 13, to the extent dependent on claim 6, wherein the requested data related to the production parameter received by the connectivity server is received in accordance with the first protocol, the method further comprising
setting up, by the connectivity server, a data presentation message comprising the requested data, in accordance with a second data communication protocol different from the first data communication protocol;
sending, by the connectivity server, the requested data related to the production parameter of the production device to the data server in accordance with the second data communication protocol.

15. An electronic computing system arranged for processing device data available in a supervised production environment comprising production devices, the system comprising:
an input arranged to receive a data request for providing production data related to a production parameter of a production device;
one or more a processing units arranged to:
obtain device connectivity data related to the production device;
set up a data request message for requesting the production data in accordance with the device connectivity data;
address a production device communication module of the production device in accordance with the device connectivity data; and
determine whether the addressing is successful; and
one or more a communication modules arranged to:
if the addressing is successful, sending the data request message to the production device communication module in accordance with the device connectivity data;
receive the requested data related to a production parameter of the production device from the production device communication module; and
an output arranged to present the received data.
